(19) Europäisches Patentamt
European Patent Office
Office européen des brevets

(11) **EP 3 532 184 B1**

(12) **FASCICULE DE BREVET EUROPEEN**

(45) Date de publication et mention
de la délivrance du brevet:
**22.06.2022 Bulletin 2022/25**

(21) Numéro de dépôt: **17801073.2**

(22) Date de dépôt: **26.10.2017**

(51) Classification Internationale des Brevets (IPC):
**B01D 35/16** (2006.01)    **B01D 29/15** (2006.01)
**B01D 29/39** (2006.01)    **B01D 29/52** (2006.01)
**B01D 29/54** (2006.01)    **B01D 29/66** (2006.01)
**B01D 29/94** (2006.01)

(52) Classification Coopérative des Brevets (CPC):
**B01D 35/16; B01D 29/15; B01D 29/39;
B01D 29/395; B01D 29/52; B01D 29/54;
B01D 29/668; B01D 29/94**

(86) Numéro de dépôt international:
**PCT/FR2017/052963**

(87) Numéro de publication internationale:
**WO 2018/078294 (03.05.2018 Gazette 2018/18)**

(54) **FILTRE À PLATEAUX VERTICAUX RAPPROCHÉS**

DICHTER VERTIKALER PLATTENFILTER

DENSE VERTICAL LEAF FILTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.10.2016 PCT/FR2016/052797**

(43) Date de publication de la demande:
**04.09.2019 Bulletin 2019/36**

(73) Titulaire: **Gaudfrin**
**78100 Saint-Germain-en-Laye (FR)**

(72) Inventeur: **GAUDFRIN, Guy**
**78860 Saint-Nom-la-Bretèche (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
**EP-A1- 0 226 478**    **WO-A1-2006/032736**
**CN-U- 201 921 580**    **FR-A- 1 425 376**
**GB-A- 2 094 653**    **US-A- 4 790 935**

## Description

## DOMAINE TECHNIQUE

La présente invention se rapporte à un filtre sous pression à plateaux verticaux à débâtissage amélioré permettant de rapprocher ses plateaux, et à son procédé de débâtissage.

## ETAT DE LA TECHNIQUE

Parmi les dispositifs utilisés pour la séparation liquide/solide d'une suspension chargée à l'échelle industrielle, il existe notamment des filtres sous pression à enceinte cylindrique dite "cuve", dont les plateaux sont disposés verticalement. Ces plateaux comprennent un ou plusieurs éléments filtrants. Ces plateaux sont disposés soit parallèlement les uns aux autres, soit radialement autour du centre de la cuve. La première disposition est dite "en parallèle" ; la seconde est dite "en étoile". Ces plateaux sont généralement entoilés et pourvus d'une tubulure raccordée à un collecteur extérieur d'évacuation du liquide filtré dit "filtrat".

Parmi les filtres dont les plateaux sont disposés en étoile, il en existe qui ne comprennent que des plateaux comprenant un même nombre d'éléments filtrants. Ces filtres sont dits "simple étoile". Il en existe aussi qui comprennent une alternance de plateaux à deux éléments filtrants comprenant une tubulure longue, dits "plateaux doubles", et de plateaux à un élément filtrant comprenant une tubulure courte, dits "plateaux simples". Les plateaux simples sont logés à la périphérie intérieure de la cuve, dans l'espace laissé libre par les plateaux doubles. Ces filtres sont dits "double étoile".

Les plateaux sont immergés dans la cuve contenant une suspension à filtrer. Cette cuve est mise sous pression tandis que les plateaux, par l'intermédiaire de leur tubulure, sont mis successivement en dépression pour filtrer la suspension (phase de filtration), puis en surpression pour détacher le "gâteau" c'est-à-dire la fraction solide de la suspension qui s'est accumulée sur la toile lors de la filtration (phase de débâtissage). Quand le débâtissage se fait en utilisant un fluide à contre-courant, on parle de "soufflage".

Lorsque le soufflage est appliqué simultanément à tous les plateaux d'un filtre, il est nécessaire d'arrêter temporairement l'extraction du filtrat, ce qui est gênant industriellement car la continuité de cette extraction n'est pas assurée.

En l'état de la technique des filtres dont les plateaux sont disposés en parallèle ou en étoile, pour assurer la continuité de l'extraction du filtrat, le soufflage est appliqué alternativement à des groupes de plateaux adjacents, les plateaux des autres groupes restant en filtration. L'espace entre plateaux doit être suffisant pour que la chute des gâteaux se faisant face lors du débâtissage puisse s'effectuer sans occasionner de bourrages fatals à la marche du filtre. Le nombre de plateaux pouvant être logés dans une cuve de diamètre donné s'en voit limité.

Dans un filtre double étoile, pour tous les plateaux, un plateau simple et un plateau double adjacents ont une sortie commune et sont donc débâtis ensemble. Le débâtissage de plateaux adjacents est inévitable.

Pour assurer la continuité de l'extraction du filtrat en logeant un maximum de plateaux dans une cuve de diamètre donné, il est nécessaire d'améliorer le procédé de débâtissage pour permettre le rapprochement des plateaux.

Il y a plus de cinquante ans on a essayé d'améliorer le procédé de débâtissage en réalisant des filtres dans lesquels on ne débâtissait pas de plateaux adjacents. La solution envisagée n'était pas satisfaisante car le gâteau de chaque plateau débâti venait se plaquer contre le gâteau des plateaux adjacents en filtration ce qui diminuait considérablement le rendement des filtres. Cette solution a donc été complètement abandonnée. Les documents FR 1 425 376 A, GB 2 094 653 A et US 4 790 935 A reflètent l'état de l'art.

L'objet de l'invention est de proposer un filtre à la fois plus compact et permettant une extraction continue du filtrat et ne présentant pas les inconvénients précédents.

## DESCRIPTION DE L'INVENTION

Le filtre à plateaux verticaux, selon l'invention, comprend des plateaux comprenant chacun une tubulure reliée à un collecteur extérieur, ledit filtre est caractérisé en ce qu'il comprend au moins deux collecteurs extérieurs, que, pour tous les plateaux, deux plateaux adjacents sont reliés à deux collecteurs extérieurs différents et que chaque plateau comprend au moins un élément filtrant, chaque élément filtrant étant constitué d'au moins deux drains et d'une toile, la toile présentant des compartiments dans chacun desquels est inséré un drain. En ne débâtissant pas deux plateaux adjacents en même temps, on ne détache qu'un seul des deux gâteaux se faisant face au lieu des deux. Ces plateaux permettent, de par leur construction, d'avoir un faible gonflement de la toile lors du débâtissage et donc un déplacement limité du gâteau. On peut ainsi réduire l'espace prévu entre les plateaux sans risque d'occasionner de bourrages fatals à la marche du filtre lors de la chute des gâteaux et sans risque de plaquer les gâteaux débâtis sur les plateaux en filtration. Ceci permet d'accroître le nombre de plateaux dans le filtre.

Selon un mode de réalisation particulier, les plateaux du filtre sont disposés en étoile.

Selon une disposition particulière, le filtre comprend une alternance de plateaux à deux éléments filtrants comprenant une tubulure longue, dits "plateaux doubles", et de plateaux à un élément filtrant comprenant une tubulure courte, dits "plateaux simples". Les plateaux simples sont logés à la périphérie intérieure de la cuve, dans l'espace laissé libre par les plateaux doubles. Ceci permet d'augmenter le nombre de plateaux pour les filtres de grandes dimensions et donc la capacité de filtration. Le filtre est alors dit "double étoile".

Avantageusement, chaque plateau simple est relié à un plateau double, formant ainsi des paires de plateaux. La liaison des plateaux simples et des plateaux doubles permet de réduire de moitié le nombre de connections aux collecteurs extérieurs. On optimise ainsi l'espace disponible à l'extérieur de la cuve.

Avantageusement, la tubulure courte d'un plateau simple est reliée à la tubulure longue d'un plateau double par un conduit reliant les deux plateaux.

Avantageusement, chaque paire de plateaux est reliée à un et un seul collecteur extérieur à travers la tubulure du plateau double. La section de l'embouchure de la tubulure du plateau double est plus grande que celle du plateau simple. Elle peut ainsi, en plus de son propre flux de filtrat, reprendre le flux de filtrat extrait du plateau simple durant la filtration, et, en plus de son propre flux de fluide de soufflage, reprendre le flux de fluide de soufflage destiné au plateau simple durant le débâtissage.

Avantageusement, le filtre double étoile comprend N collecteurs extérieurs, N étant supérieur ou égal à trois. Il est ainsi possible d'appliquer alternativement le soufflage à N groupes de plateaux.

Selon une caractéristique particulière, pour toutes les paires de plateaux, N paires consécutives de plateaux sont connectées aux N collecteurs extérieurs. Le plateau simple et le plateau double d'une même paire sont espacés d'un nombre pair de plateaux. Les paires de plateaux connectées à un même collecteur extérieur forment ainsi un groupe de plateaux non adjacents dit "groupe indépendant de plateaux", dont les plateaux pourront être débâtis simultanément. Le filtre comporte donc N groupes indépendants de plateaux qu'il est possible de débâtir en établissant le contre-courant de soufflage alternativement dans chacun des N collecteurs extérieurs. Ainsi dans un filtre comportant trois collecteurs extérieurs, les plateaux simples et doubles d'une même paire sont espacés de deux plateaux. Cette disposition permet de débâtir, dans le filtre comportant trois collecteurs extérieurs, un plateau tous les trois plateaux, c'est-à-dire que lorsqu'un plateau est débâti, les deux plateaux adjacents et ceux qui les suivent directement ne sont pas débâtis.

L'invention concerne également un procédé de débâtissage des gâteaux d'un filtre à plateaux verticaux présentant au moins une des caractéristiques précédentes, ledit procédé est caractérisé en ce que chaque collecteur extérieur est parcouru par un courant de filtrat qui s'inverse selon un cycle prédéfini, et en ce que les cycles de tous les collecteurs extérieurs sont identiques et déphasés entre eux. Dans chaque collecteur extérieur, les inversions de courant correspondent aux passages de la phase de filtration à la phase de débâtissage des plateaux reliés à ce collecteur, et vice-versa. A chaque phase de débâtissage, on ne débâtit que les plateaux reliés à un seul collecteur extérieur, les autres plateaux restant en phase de filtration, assurant ainsi la continuité de l'extraction du filtrat. On s'assure ainsi de ne jamais débâtir deux plateaux adjacents en même temps.

Avantageusement, les cycles d'inversions de courants de filtrat de tous les collecteurs extérieurs sont déphasés d'un même intervalle de temps. Les phases de filtration de chaque groupe indépendant de plateaux doivent être déphasées d'un même intervalle de temps afin de limiter les variations de débit de filtrat extrait du filtre.

Selon une première variante, l'inversion du courant de filtrat est effectuée au moyen d'une pompe, au travers d'un circuit de soufflage pouvant mettre le refoulement de ladite pompe en communication avec chacun des collecteurs extérieurs. Cette pompe envoie du filtrat alternativement dans chacun des collecteurs extérieurs à une pression supérieure à celle du filtre, mettant ainsi les plateaux correspondants en surpression pour procéder à leur débâtissage.

Selon une deuxième variante, l'inversion du courant de filtrat est effectuée au moyen d'un ballon sur pressurisé rempli dudit filtrat, au travers d'un circuit de soufflage pouvant mettre la sortie dudit ballon sur pressurisé en communication avec chacun des collecteurs extérieurs. Ce ballon sur pressurisé, alimenté en air comprimé au travers d'un régulateur de pression différentielle, envoie du filtrat alternativement dans chacun des collecteurs extérieurs à une pression supérieure à celle du filtre, mettant ainsi les plateaux correspondants en surpression pour procéder à leur débâtissage.

Avantageusement, pour ces deux premières variantes, le circuit de soufflage est équipé en parallèle d'un déversoir de sécurité, de hauteur comprise entre 1 et 5 m au-dessus du filtre, raccordé à l'intérieur du filtre en la partie haute de la cuve dudit filtre. Ce déversoir de sécurité limite naturellement la surpression de soufflage afin d'éviter tout risque d'endommager les éléments filtrants des plateaux.

Selon une troisième variante, l'inversion du courant de filtrat est effectuée au moyen d'un ballon rempli dudit filtrat, en charge sur le filtre et relié à la cuve dudit filtre en leur partie haute, ladite inversion étant effectuée au travers d'un circuit de soufflage pouvant mettre la sortie dudit ballon en communication avec chacun des collecteurs extérieurs. Ce ballon, soumis à la même pression que le filtre par la mise en communication de leur partie haute, envoie du filtrat, sous le seul effet de la gravité, alternativement dans chacun des collecteurs extérieurs à une pression supérieure à celle du filtre, mettant ainsi les plateaux correspondants en surpression pour procéder à leur débâtissage.

Selon une quatrième variante, l'inversion du courant de filtrat est effectuée au moyen de ballons remplis dudit filtrat, en charge sur le filtre et reliés à la cuve dudit filtre en leur partie haute, ladite inversion étant effectuée au travers de circuits de soufflage pouvant mettre chacun la sortie d'un et d'un seul desdits ballons en communication avec un et un seul des collecteurs extérieurs. Ces ballons, soumis à la même pression que le filtre par la mise en communication de leur partie haute, envoient du filtrat, sous le seul effet de la gravité, alternativement dans chacun des collecteurs extérieurs à une pression supérieure à celle du filtre, mettant ainsi les plateaux correspondants en surpression pour procéder à leur débâtissage.

Avantageusement, pour ces deux dernières variantes, la partie haute des ballons est située entre 1 et 5 m au-dessus du filtre. On limite ainsi naturellement la surpression de soufflage afin d'éviter tout risque d'endommager les éléments filtrants des plateaux.

D'autres avantages pourront encore apparaître à l'homme du métier à la lecture des exemples ci-dessous, illustrés par les figures annexées, données à titre d'exemples :

- la figure 1 est une perspective d'un filtre double étoile selon l'invention, sans son couvercle,
- la figure 2 est une vue de dessus d'un filtre double étoile de l'état de la technique, dont la cuve est coupée au niveau des tubulures des plateaux dudit filtre,
- la figure 3 est une vue de dessus d'un filtre simple étoile de l'état de la technique, dont la cuve est coupée au niveau des tubulures des plateaux dudit filtre,
- la figure 4 est une vue de dessus du filtre double étoile selon l'invention de la figure 1, sans son couvercle,
- la figure 5a est une vue de dessus d'un filtre simple étoile selon l'invention, sans son couvercle,
- la figure 5b est une vue de dessus d'un filtre selon l'invention, dont les plateaux sont disposés en parallèle, sans son couvercle,
- la figure 6a est un détail en perspective de plateaux simples et de plateaux doubles, et de leur conduit de connexion selon le mode de réalisation de la figure 1,
- la figure 6b est une coupe d'un plateau de la figure 6a selon le plan A
- la figure 7 est une coupe montrant le détail de la liaison entre la tubulure d'un plateau filtrant et un conduit de connexion de la figure 6a,
- la figure 8a est une coupe schématique développée de quatre plateaux adjacents débâtis simultanément selon un procédé de l'état de la technique,
- la figure 8b est une coupe schématique développée de quatre plateaux dont deux, non adjacents, débâtis selon le procédé de l'invention,
- la figure 9 est un schéma d'une première variante du procédé de l'invention,
- la figure 10 est un schéma d'une deuxième variante du procédé de l'invention,
- la figure 11 est un schéma d'une troisième variante du procédé de l'invention,
- la figure 12 est un schéma d'une quatrième variante du procédé de l'invention.

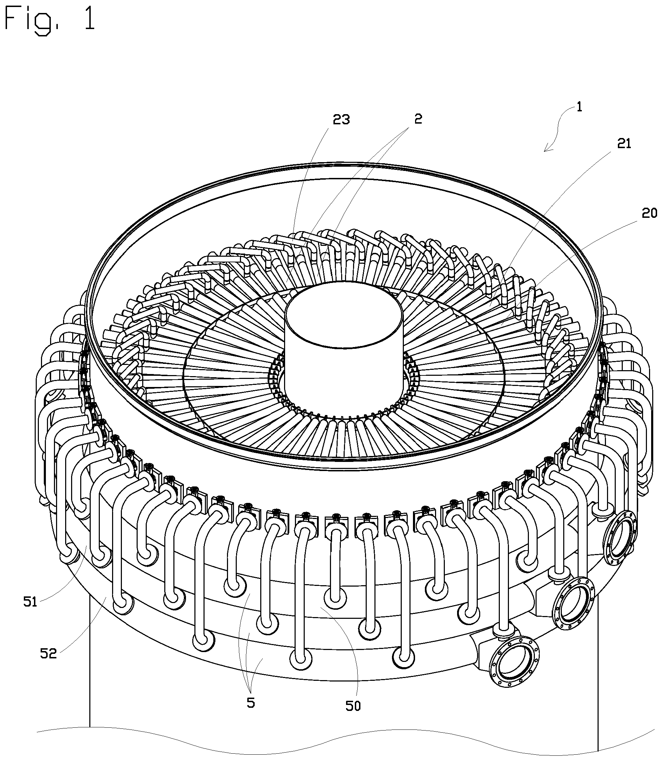

Dans la suite de la description, on considèrera que le haut correspond aux hauts des figures 1 et des figures 6 à 12, et le bas aux bas. Les mêmes éléments porteront les mêmes références.

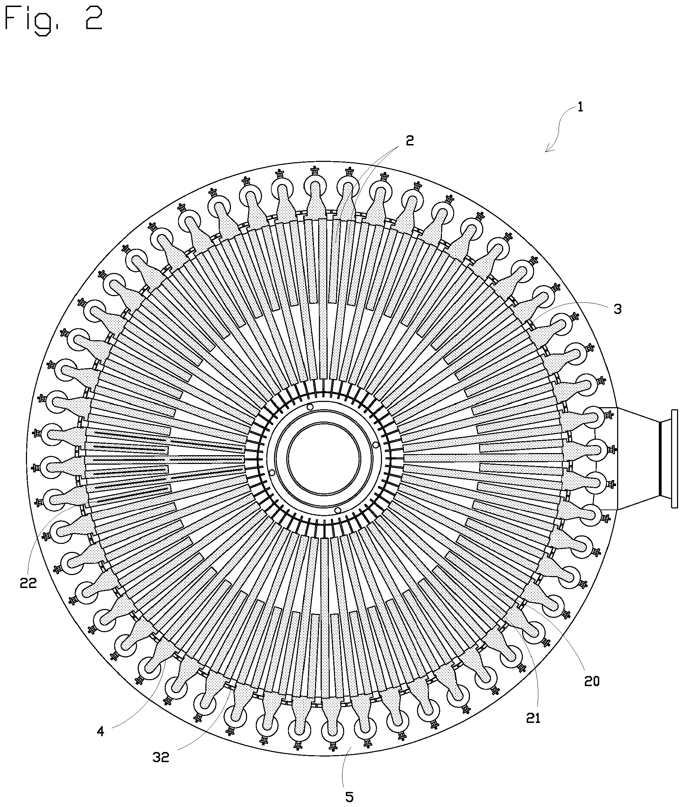

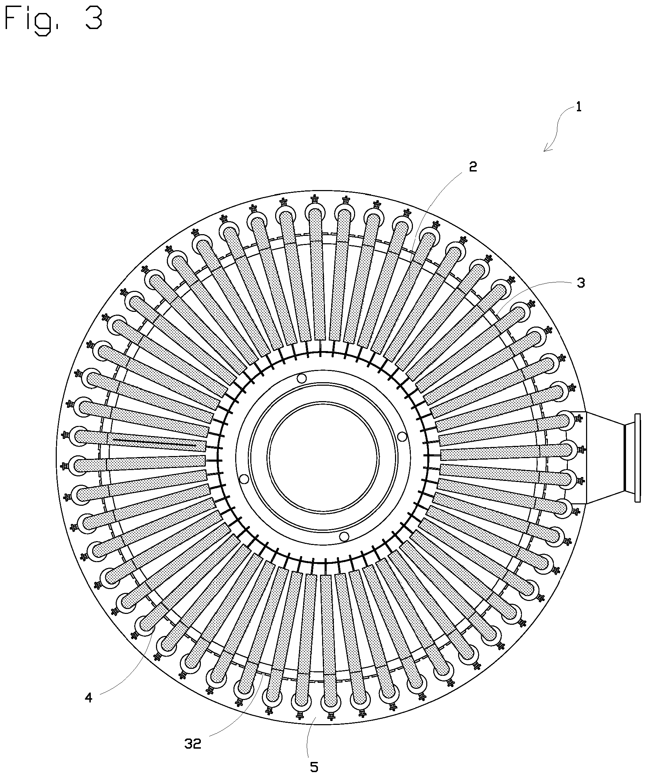

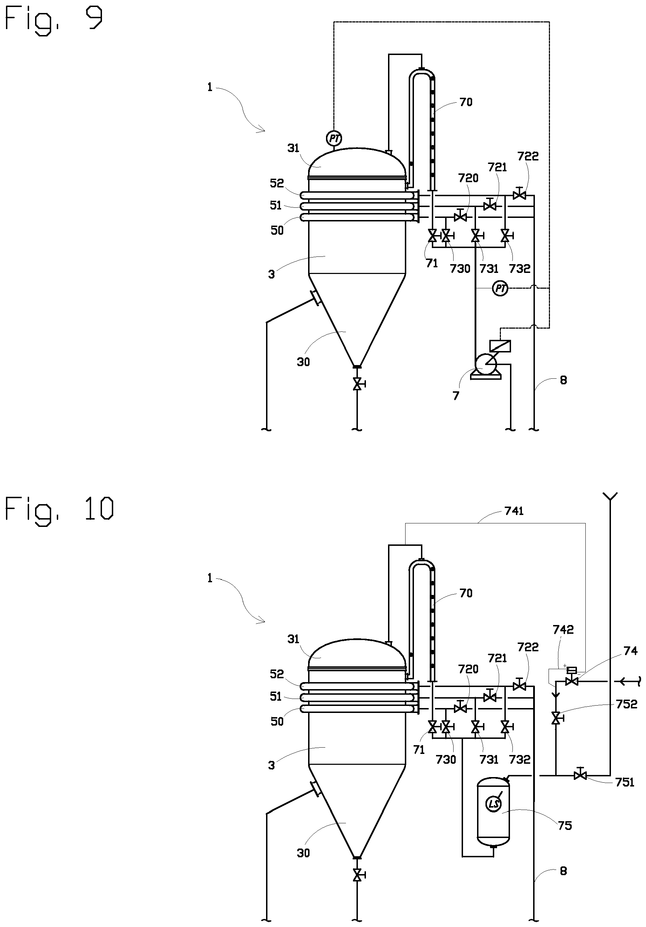

Un filtre 1 de l'état de la technique, illustré figure 2 ou figure 3, est un filtre à plateaux 2 verticaux sous pression pour la séparation liquide/solide d'une suspension chargée. Il est constitué d'une cuve cylindrique 3 avec un fond inférieur 30 conique et un couvercle 31 amovible bombé représentés sur les figures 9 à 12. Les plateaux 2 sont suspendus verticalement à l'intérieur de la cuve 3 et disposés radialement en étoile.

Les filtres 1 de petit diamètre de l'état de la technique, illustrés figure 3, sont équipés de plateaux 2 tous identiques, connectés à travers la paroi 32 de la cuve 3 par des tubes coudés, appelés "sorties filtrat" 4, à un collecteur extérieur 5 qui fait le tour du filtre (disposition simple étoile).

Les filtres 1 de grand diamètre de l'état de la technique, illustrés figure 2, sont équipés de plateaux 2 de deux types différents, des plateaux 2 à un élément filtrant 22, dits plateaux simples 20, et des plateaux 2 à deux éléments filtrants 22, dits plateaux doubles 21. Ces plateaux simples 20 et ces plateaux doubles 21 sont connectés à travers la paroi 32 de la cuve 3 par des sorties filtrat 4, à un collecteur extérieur 5 (disposition double étoile). Dans ce cas, tous les plateaux 2 sont regroupés par paires, un plateau simple 20 et un plateau double 21 adjacents ayant une sortie filtrat 4 commune.

Le filtre 1 de la figure 1 est un filtre double étoile selon l'invention, dont les plateaux 2 verticaux sont reliés par groupes indépendants à trois collecteurs extérieurs 5 distincts. Ainsi, un tiers des plateaux simples 20 et des plateaux doubles 21 sont reliés à un premier collecteur extérieur 50, un deuxième tiers à un deuxième collecteur extérieur 51, et le troisième tiers au troisième collecteur extérieur 52. Chaque plateau simple 20 est relié à un plateau double 21 par l'intermédiaire d'un conduit 23, formant ainsi une paire de plateau. Le plateau double 21 de chaque paire est relié à un et un seul collecteur extérieur 5 par une sortie filtrat 4.

Dans cet exemple, le nombre N de collecteurs extérieurs 5 est de trois. Pour N collecteurs extérieurs 5, N étant supérieur ou égal à trois, on aurait N groupes indépendants de plateaux 2 reliés chacun à un des N collecteurs extérieurs 5.

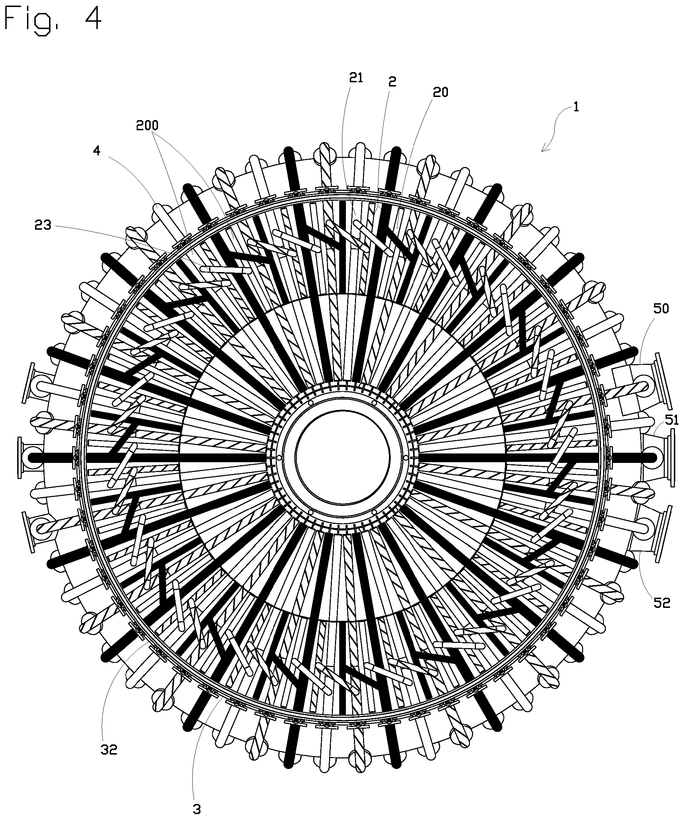

Ainsi comme on peut le voir figure 4, pour toutes les paires de plateaux 2, trois paires consécutives de plateaux 2 sont connectées aux trois collecteurs extérieurs 50, 51 et 52. Les plateaux simples 20 et les plateaux doubles 21 d'une même paire sont espacés de deux plateaux 2. Les paires de plateaux 2 connectées à un même collecteur extérieur 50, 51 ou 52, forment ainsi un groupe indépendant de plateaux 2 non adjacents. Le filtre comporte donc trois groupes indépendants de plateaux 2. Un premier groupe indépendant de plateaux 2 est représenté en noir sur la figure 4, un deuxième groupe en hachuré, et le troisième groupe en blanc. Comme on peut le voir, à un plateau double 21 du premier groupe (noir) succède un plateau simple 20 du troisième groupe (blanc), puis un plateau double 21 du deuxième groupe (hachuré), puis un plateau simple 20 du premier groupe (noir), puis un plateau double 21 du troisième groupe (blanc), puis un plateau simple 20 du deuxième groupe (hachuré), puis un plateau double 21 du premier groupe (noir) et ainsi de suite. Les plateaux simples 20 et les plateaux doubles 21 d'une même paire, du fait de leur éloignement, ne sont plus connectés entre eux au travers de la paroi 32 de la cuve 3 comme en l'état de la technique, mais au moyen d'un conduit 23 amovible représenté sur la figure 4 dans la couleur du groupe de plateaux indépendants auquel le conduit 23 appartient. Dans cette disposition, les éléments filtrants d'un même groupe ne sont jamais adjacents. Dans le cas de la figure 4, les trois modes de représentation utilisés (noir, hachuré et blanc) font ressortir les différents circuits de circulation au travers des tubulures 200, des conduits 23 et des sorties filtrat 4.

Dans cet exemple, le nombre N de collecteurs extérieurs 5 est de trois, et le plateau simple 20 et le plateau double 21 d'une même paire sont espacés de deux plateaux 2. Pour N collecteurs extérieurs 5, N étant supérieur ou égal à trois, le plateau simple 20 et le plateau double 21 d'une même paire seront espacés de deux ou d'un autre nombre pair de plateaux 2.

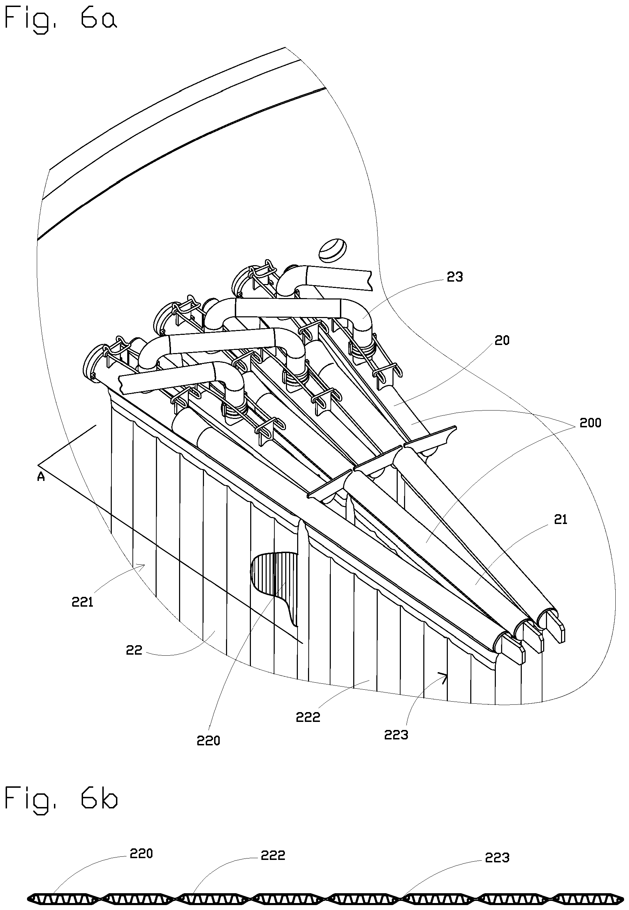

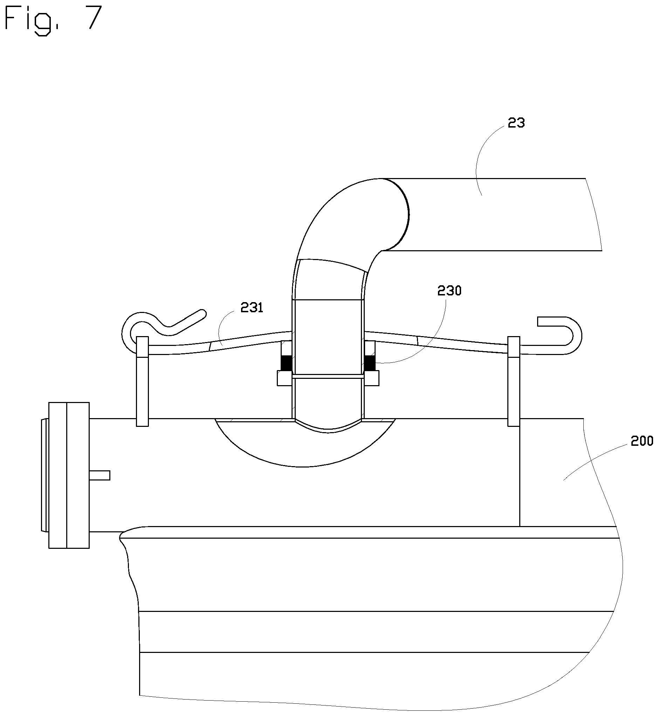

On peut voir figure 6a et 7, que tous les plateaux simples 20 et que tous les plateaux doubles 21 comprennent respectivement un et deux éléments filtrants 22 constitués chacun de drains 220 et d'une toile 221. Ces éléments filtrants 22 sont reliés aux tubulures 200 des plateaux 2. Chaque conduit 23 de connexion relie lesdites tubulures 200 des paires de plateaux 2 en formant un pont entre elles. Des joints 230, placés entre les tubulures 200 et chacune des deux extrémités des conduits 23 sont comprimés par des ressorts filaires 231 qui exercent une force suffisante pour garantir l'étanchéité. Comme illustré figure 6a, les éléments filtrants 22 comprennent plusieurs drains 220, chaque drain étant disposé dans un compartiment 222 réalisé dans la toile 221. Ces compartiments 222 peuvent être réalisés avec, par exemple, des coutures ou des soudures 223 sur ladite toile 221. Ces éléments filtrants 22 sont détaillés dans le brevet EP226478 intégré par référence. La figure 6b montre en coupe l'élément filtrant 22 où l'on peut voir que les compartiments 222, de par leur étroitesse, vont avoir un faible gonflement et permettre ainsi de rapprocher plus lesdits éléments filtrants les uns des autres que des éléments filtrants classiques ne comprenant pas de compartiments 222.

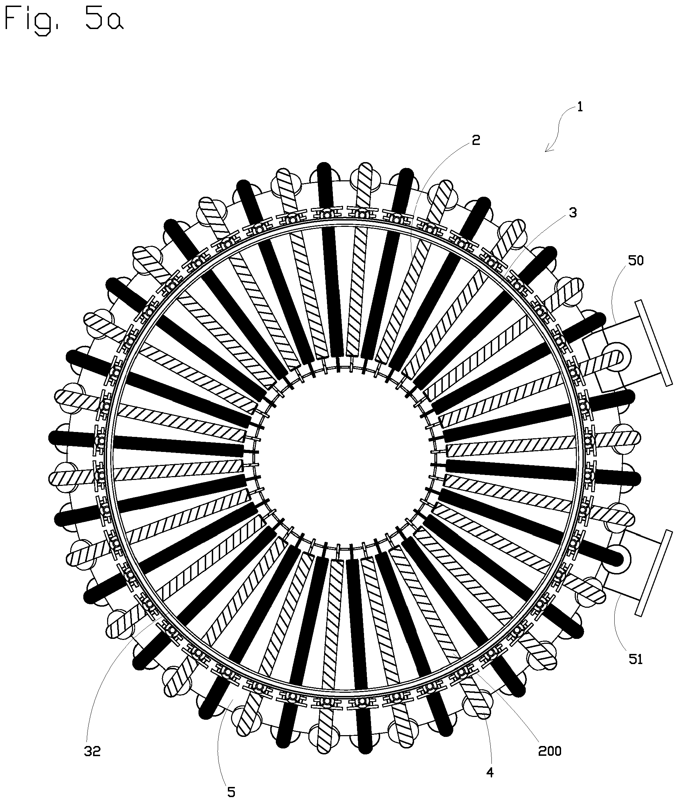

Le filtre 1 de la figure 5a est un filtre simple étoile selon l'invention, dont les plateaux 2, tous identiques, sont reliés par groupes indépendants à deux collecteurs extérieurs 5 distincts. Ainsi, une moitié des plateaux 2 est reliée à un premier collecteur extérieur 50 et la deuxième moitié au deuxième collecteur extérieur 51.

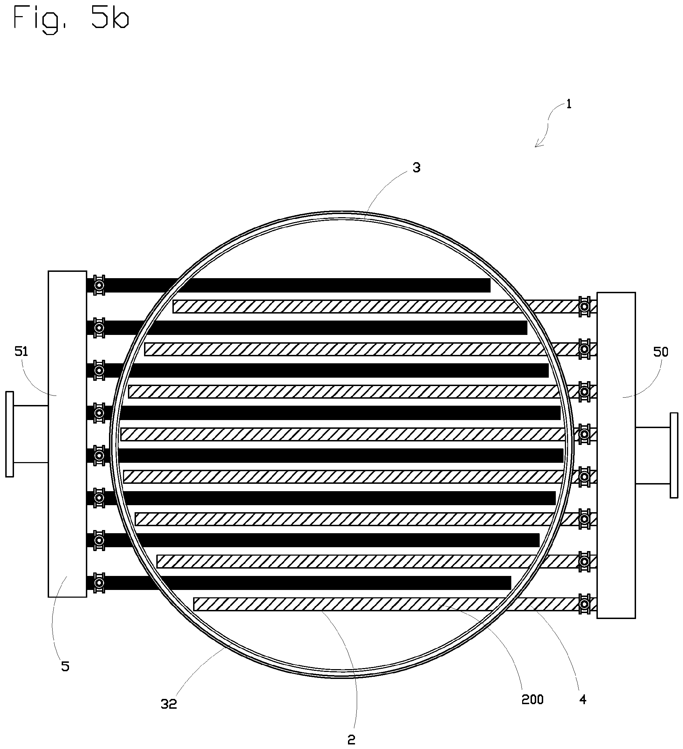

Le filtre 1 de la figure 5b est un filtre selon l'invention dont les plateaux 2 sont disposés en parallèle et sont reliés par groupes indépendants à deux collecteurs extérieurs 5 distincts. Ainsi, une moitié des plateaux 2 est reliée à un premier collecteur extérieur 50 et la deuxième moitié au deuxième collecteur extérieur 51.Ainsi comme on peut le voir figure 5a et figure 5b, pour tous les plateaux 2, deux plateaux 2 consécutifs sont connectés aux deux collecteurs extérieurs 50 et 51. Les plateaux 2 connectés à un même collecteur extérieur 50 ou 51, forment ainsi un groupe indépendant de plateaux 2 non adjacents. Le filtre comporte donc deux groupes indépendants de plateaux 2. Un premier groupe indépendant de plateaux 2 est représenté en noir sur la figure 5a et sur la figure 5b, et le deuxième groupe indépendant de plateaux 2 est représenté en hachuré. Comme on peut le voir, à un plateau 2 du premier groupe (noir) succède un plateau 2 du deuxième groupe (hachuré), puis un plateau 2 du premier groupe (noir) et ainsi de suite. Dans cette disposition, les éléments filtrants 22 d'un même groupe ne sont jamais adjacents. Dans le cas de la figure 5a et dans le cas de la figure 5b, les deux modes de représentation utilisés (noir et hachuré) font ressortir les différents circuits de circulation au travers des tubulures 200 et des sorties filtrat 4.

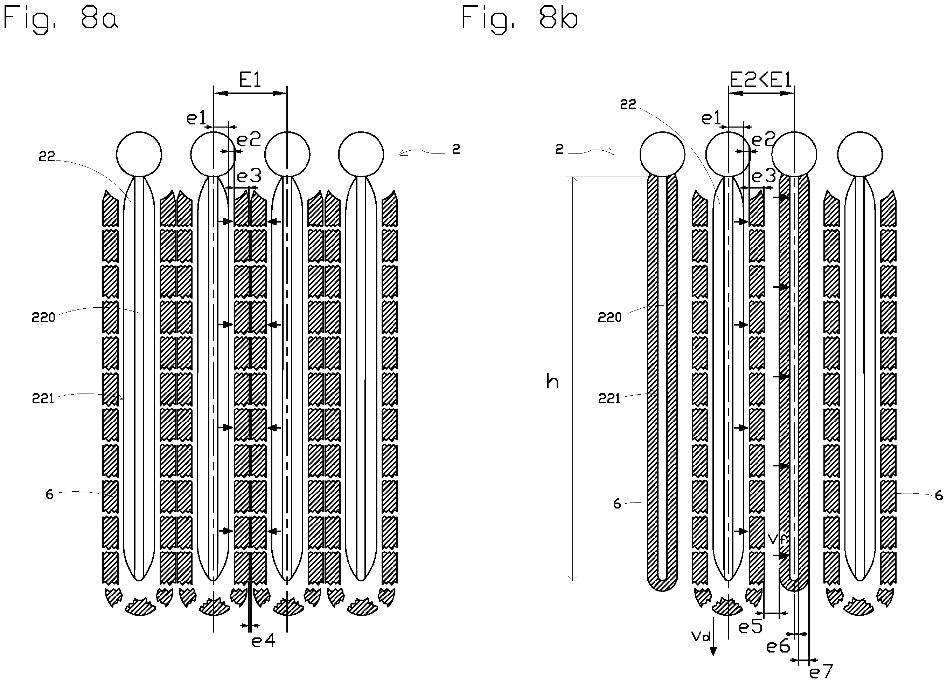

Dans l'état de la technique, le cycle de filtration du filtre 1 se décompose en deux phases : la phase de filtration et la phase de débâtissage. Pendant la phase de filtration, la cuve 3 du filtre 1 est remplie de la suspension à filtrer. Ladite cuve 3 est ensuite mise sous pression tandis que les plateaux 2, par l'intermédiaire de leur tubulure 200, sont mis en dépression. La phase liquide de la suspension passe alors au travers des toiles 221 des éléments filtrants 22, et la phase solide reste à la surface desdites toiles 221, formant un gâteau 6. Pendant la phase de filtration, les toiles 221 sont plaquées sur les drains 220 de l'élément filtrant 22. La phase de filtration s'arrête quand la résistance des gâteaux 6 à l'écoulement du liquide devient trop importante. Il faut alors détacher les gâteaux 6 des toiles 221, c'est la phase de débâtissage. Plusieurs procédés de débâtissage permettent de détacher les gâteaux 6 des éléments filtrants 22, mais il s'agit souvent, comme on peut le voir figure 8a, d'envoyer un fluide à contre-courant simultanément dans tous les éléments filtrants 22, fluide qui va gonfler leur toile 221 et passer au travers desdites toiles sans passer au travers du gâteau 6, détachant ainsi ledit gâteau 6 de l'élément filtrant 22 par soufflage. Lors du soufflage, la toile 221 se gonfle et s'écarte des drains 220. Le fluide utilisé pour détacher les gâteaux peut être en particulier du filtrat, de l'eau, de l'air ou de la vapeur.

Le procédé de débâtissage le plus courant est le débâtissage par contre-courant de filtrat. Le plus souvent, le filtrat utilisé est stocké pendant la phase de filtration dans un ballon, dit "ballon de soufflage", situé au-dessus du filtre 1. Pendant la phase de débâtissage, ledit filtrat est renvoyé sous le seul effet de la gravité dans tous les éléments filtrants 22 du filtre 1, après mise à l'atmosphère de la cuve 3 dudit filtre 1. Une fois détachés de leur élément filtrant 22, les gâteaux 6 décantent au sein de la suspension entre les plateaux 2, jusqu'au fond du filtre 1, avant d'être extraits.

On voit figure 8a que dans un filtre 1 de l'état de la technique, lors de la phase de débâtissage, les gâteaux 6 débâtis se font face. Il faut s'assurer que lesdits gâteaux 6 ne rentrent pas en contact les uns avec les autres quand ils se détachent des toiles 221 gonflées par le filtrat.

Typiquement, la distance minimum E1 entre les axes verticaux de deux éléments filtrants 22 adjacents du filtre 1 de l'état de la technique correspond à la somme de :

- la distance maximum de gonflement e1 séparant l'axe vertical d'un premier élément filtrant 22 et sa toile 221 gonflée par le filtrat,
- la distance de détachement e2 du gâteau 6 dudit premier élément filtrant 22,
- l'épaisseur maximum autorisée e3 dudit gâteau 6,
- la distance maximum de gonflement e1 séparant l'axe vertical du deuxième élément filtrant 22 et sa toile 221 gonflée par le filtrat,
- la distance de détachement e2 du gâteau 6 dudit deuxième élément filtrant 22,
- l'épaisseur maximum autorisée e3 dudit gâteau 6,
- une distance de sécurité e4 entre gâteaux 6 débâtis se faisant face.

$$E1 = (2 \times e1) + (2 \times e2) + (2 \times e3) + e4$$

On aura par exemple une distance minimum E1 entre les axes verticaux de deux éléments filtrants 22 adjacents de 124 mm, pour une distance maximum de gonflement e1 de 25 mm, pour une distance de détachement e2 de 10 mm, pour une épaisseur maximum autorisée e3 de 25 mm et pour une distance de sécurité e4 de 4 mm.

On voit figure 8b, montré schématiquement et sans représenter les compartiments 222 de la figure 6a, que dans un filtre 1 de l'invention, lors de la phase de débâtissage d'un groupe de plateaux indépendants, les gâteaux 6 débâtis ne se font pas face. Chaque gâteau 6 débâti fait face à un gâteau 6 en cours de formation, d'épaisseur plus faible mais calculable en fonction de l'épaisseur dudit gâteau 6 débâti, non détaché et sous lequel la toile 221 n'est pas gonflée. Pour s'assurer qu'un gâteau 6 débâti ne rentre pas en contact avec le gâteau 6 en cours de formation lui faisant face, il faut prévoir une distance de sécurité e5 entre eux. On évite ainsi que, lors de sa décantation, le gâteau 6 débâti soit plaqué sur le gâteau 6 en cours de formation lui faisant face par le courant de suspension pénétrant ce dernier.

Cette distance de sécurité e5 est calculée par la formule suivante:

$$e5 = h \times Vf / Vd$$

- h est la hauteur des éléments filtrants 22,
- Vf est la vitesse du courant de suspension pénétrant le gâteau 6 en cours de formation,
- Vd est la vitesse de décantation du gâteau 6 dans la suspension.

La distance minimum E2 entre les axes verticaux de deux éléments filtrants 22 adjacents du filtre 1 de l'invention correspond à la somme de :

- la distance maximum de gonflement e1 séparant l'axe vertical d'un premier élément filtrant 22 et sa toile 221 gonflée par le filtrat,
- la distance de détachement e2 du gâteau 6 dudit premier élément filtrant 22,
- l'épaisseur maximum autorisée e3 dudit gâteau 6,
- la distance maximum e6 séparant l'axe vertical du deuxième élément filtrant 22 et sa toile 221 appliquée audit élément filtrant 22,
- l'épaisseur e7 du gâteau 6 en cours de formation,
- la distance de sécurité e5.

$$E2 = e1 + e2 + e3 + e5 + e6 + e7$$

Dans le cas d'un filtre 1 de l'invention à deux collecteurs extérieurs, on aura par exemple une distance minimum E2 entre les axes verticaux de deux éléments filtrants 22 adjacents de 96 mm pour une distance maximum de gonflement e1 de 25 mm, pour une distance de détachement e2 de 10 mm, pour une épaisseur maximum autorisée e3 de 25 mm, pour une hauteur h de 3000 mm, pour une vitesse du courant de suspension Vf de 0,8 mm/s, pour une vitesse de décantation Vd de 200 mm/s, pour une distance maximum e6 de 6 mm et pour une épaisseur maximum autorisée e7 de 18 mm. E2 est donc inférieur à E1 de plus de 20%.

L'exemple ci-dessus montre que pour un filtre 1 de l'invention, la distance minimum entre les axes verticaux de deux éléments filtrants 22 adjacents est réduite par rapport à ladite distance minimum pour un filtre 1 de l'état de la technique. Il est donc possible dans un filtre 1 de l'invention, de rapprocher les plateaux 2, d'augmenter le nombre desdits plateaux 2 et de maximiser ainsi la surface filtrante dudit filtre 1.

Le schéma représenté figure 9 montre une première variante du procédé de débâtissage d'un filtre 1 de l'invention à trois collecteurs extérieurs 5. Dans cette configuration, au cours des phases de débâtissage des groupes indépendants de plateaux 2, la différence entre la pression à l'intérieur des éléments filtrants 22 et la pression à l'extérieur des éléments filtrants 22, pressions mesurées au moyen de transmetteurs de pression PT, est régulée par la vitesse de rotation de la pompe 7. Un déversoir de sécurité 70, en col de cygne, raccorde le refoulement de la pompe 7 à la partie haute de la cuve 3 du filtre 1, au travers d'une vanne automatique 71. Le déversoir 70 est connecté en son sommet au couvercle 31 du filtre 1 pour permettre une libre circulation de l'air comprimé entre le couvercle 31 de la cuve 3 du filtre 1 et le déversoir 70. La hauteur du déversoir 70 déterminera physiquement la différence maximum autorisée entre la pression à l'intérieur des éléments filtrants 22 et la pression à l'extérieur des éléments filtrants 22. En tout point des éléments filtrants 22 du groupe de plateaux 2 indépendants en phase de débâtissage, la différence entre la pression à l'intérieur et la pression à l'extérieur desdits éléments filtrants 22 sera donc inférieure à la pression correspondant à la hauteur du déversoir 70 rempli de fluide de soufflage.

Pendant la phase de filtration du groupe indépendant de plateaux 2 qui lui est connecté, chacun des trois collecteurs extérieurs 50, 51, 52 est en communication avec le conduit général 8 de filtrat au travers d'une vanne automatique 720, 721, 722. Pendant la phase de débâtissage du groupe indépendant de plateaux 2 qui lui est connecté, celui des trois collecteurs extérieurs 50, 51, 52 concerné est en communication avec le refoulement de la pompe 7 au travers d'une vanne automatique 730, 731, 732. Si la pression de refoulement de la pompe 7 était telle que la différence maximum autorisée entre la pression à l'intérieur des éléments filtrants 22 et la pression à l'extérieur des éléments filtrants 22 était atteinte, tout risque de dépassement serait évité grâce au déversement du fluide de soufflage excédentaire dans la cuve 3 du filtre 1 par le déversoir 70.

Le schéma représenté figure 10 montre une deuxième variante du procédé de débâtissage d'un filtre 1 de l'invention à trois collecteurs extérieurs 5. Dans cette configuration, au cours des phases de débâtissage des groupes indépendants de plateaux 2, la différence entre la pression à l'intérieur des éléments filtrants 22 et la pression à l'extérieur des éléments filtrants 22 est régulée par un régulateur automoteur de pression différentielle d'air comprimé 74 installé sur l'alimentation en air comprimé du ballon sur pressurisé 75 rempli de filtrat. La conduite d'impulsion basse pression 741 du régulateur 74 est connectée au couvercle 31 du filtre 1. La conduite d'impulsion haute pression 742 du régulateur 74 est connectée à l'alimentation en air comprimé du ballon sur pressurisé 75, en aval du régulateur 74 et en amont de la vanne automatique d'isolement 752. Un déversoir de sécurité 70, en col de cygne, raccorde le fond du ballon sur pressurisé 75 à la partie haute de la cuve 3 du filtre 1, au travers d'une vanne automatique 71. Le déversoir 70 est connecté en son sommet au couvercle 31 du filtre 1 pour permettre une libre circulation de l'air comprimé entre le couvercle 31 de la cuve 3 du filtre 1 et le déversoir 70. La hauteur du déversoir 70 déterminera physiquement la différence maximum autorisée entre la pression à l'intérieur des éléments filtrants 22 et la pression à l'extérieur des éléments filtrants 22. En tout point des éléments filtrants 22 du groupe de plateaux 2 indépendants en phase de débâtissage, la différence entre la pression à l'intérieur et la pression à l'extérieur desdits éléments filtrants 22 sera donc inférieure à la pression correspondant à la hauteur du déversoir 70 rempli de fluide de soufflage.

Pendant la phase de filtration du groupe indépendant de plateaux 2 qui lui est connecté, chacun des trois collecteurs extérieurs 50, 51, 52 est en communication avec le conduit général 8 de filtrat au travers d'une vanne automatique 720, 721, 722. Avant d'entamer la phase de débâtissage du groupe indépendant de plateaux 2 qui lui est connecté, celui des trois collecteurs extérieurs 50, 51, 52 concerné est mis en communication avec le ballon sur pressurisé 75 au travers d'une vanne automatique 730, 731, 732. Le ballon sur pressurisé 75 se remplit de filtrat, vanne automatique d'évent 751 ouverte et vanne automatique d'isolement 752 fermée. Quand le contact de niveau LS est atteint, la vanne automatique d'évent 751 se ferme et la vanne automatique d'isolement 752 s'ouvre pour permettre la régulation de la différence entre la pression à l'intérieur des éléments filtrants 22 et la pression à l'extérieur des éléments filtrants 22, entamant ainsi la phase de débâtissage. Si la pression d'air comprimé venant du régulateur automoteur de pression différentielle d'air comprimé 74 était telle que la différence maximum autorisée entre la pression à l'intérieur des éléments filtrants 22 et la pression à l'extérieur des éléments filtrants 22 était atteinte, tout risque de dépassement serait évité grâce au déversement du fluide de soufflage excédentaire dans la cuve 3 du filtre 1 par le déversoir 70.

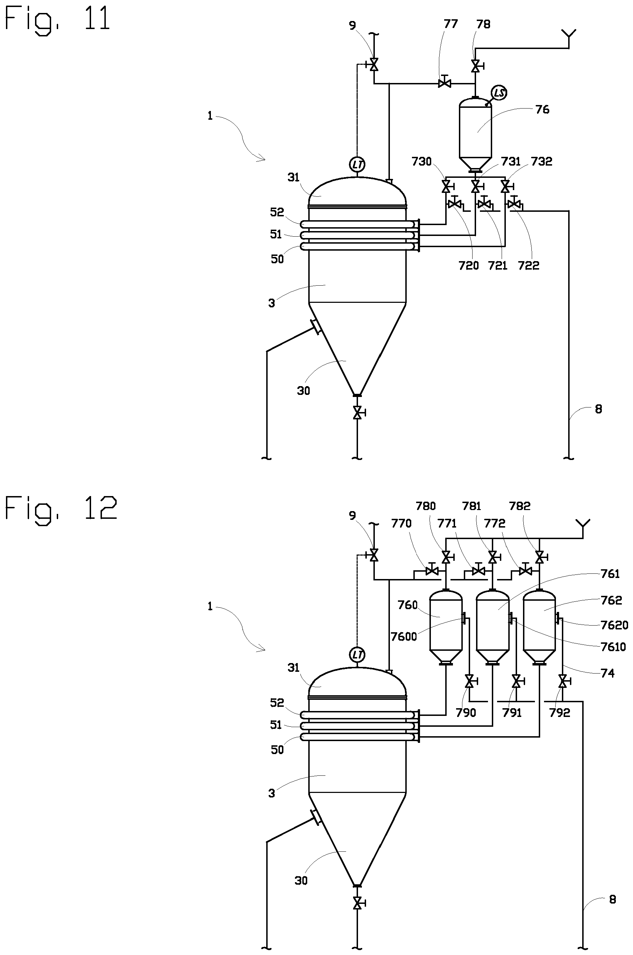

Le schéma représenté figure 11 montre une troisième variante du procédé de débâtissage d'un filtre 1 de l'invention à trois collecteurs extérieurs 5. Dans cette configuration, au cours des phases de débâtissage des groupes indépendants de plateaux 2, la différence entre la pression à l'intérieur des éléments filtrants 22 et la pression à l'extérieur des éléments filtrants 22 provient de la différence entre le niveau de filtrat dans le ballon 76 et le niveau de suspension dans le filtre 1. Le ballon 76 est connecté en son sommet au couvercle 31 du filtre 1 au travers d'une vanne automatique d'équilibrage 77 pour permettre une libre circulation de l'air comprimé entre le couvercle 31 de la cuve 3 du filtre 1 et le ballon 76 pendant les phases de débâtissage. La hauteur du ballon 76 déterminera physiquement la différence maximum autorisée entre la pression à l'intérieur des éléments filtrants 22 et la pression à l'extérieur des éléments filtrants 22. En tout point des éléments filtrants 22 du groupe de plateaux 2 indépendants en phase de débâtissage, la différence entre la pression à l'intérieur et la pression à l'extérieur desdits éléments filtrants 22 sera donc inférieure à la pression correspondant à la hauteur du ballon 76 rempli de fluide de soufflage.

Pendant la phase de filtration du groupe indépendant de plateaux 2 qui lui est connecté, chacun des trois collecteurs extérieurs 50, 51, 52 est en communication avec le conduit général 8 de filtrat au travers d'une vanne automatique 720, 721, 722. . Avant d'entamer la phase de débâtissage du groupe indépendant de plateaux 2 qui lui est connecté, celui des trois collecteurs extérieurs 50, 51, 52 concerné est mis en communication avec le ballon 76 au travers d'une vanne automatique 730, 731, 732. Le ballon 76 se remplit de filtrat, vanne automatique d'évent 78 ouverte et vanne automatique d'équilibrage 77 fermée. Quand le contact de niveau LS est atteint, la vanne automatique d'évent 78 se ferme et la vanne automatique d'équilibrage 77 s'ouvre pour équilibrer la pression au sommet du filtre 1 et la pression au sommet du ballon 76, entamant ainsi la phase de débâtissage. Durant cette phase, le ballon envoie le filtrat, sous le seul effet de la gravité, dans le collecteur extérieur 50, 51, 52 concerné. Le niveau de suspension dans le filtre 1, mesuré sur le transmetteur de niveau LT, augmente. Un niveau de suspension de consigne dans le filtre 1 est rétabli après chaque phase de débâtissage par ajout d'air comprimé au sommet du filtre 1 à travers la vanne automatique 9. La hauteur du ballon 76 est prévue pour que la différence maximum autorisée entre la pression à l'intérieur des éléments filtrants 22 et la pression à l'extérieur des éléments filtrants 22 ne soit jamais dépassée.

Le schéma représenté figure 12 montre une quatrième variante du procédé de débâtissage d'un filtre 1 de l'invention à trois collecteurs extérieurs 5. Dans cette configuration, au cours des phases de débâtissage des groupes indépendants de plateaux 2, la différence entre la pression à l'intérieur des éléments filtrants 22 et la pression à l'extérieur des éléments filtrants 22 provient de la différence entre le niveau de filtrat dans l'un des ballons 760, 761, 762 et le niveau de suspension dans le filtre 1. Les ballons 760, 761,762 sont connectés en leur sommet au couvercle 31 du filtre 1 au travers d'une vanne automatique d'équilibrage 770, 771, 772 pour permettre une libre circulation de l'air comprimé entre le couvercle 31 de la cuve 3 du filtre 1 et l'un des ballons 760, 761, 762 pendant les phases de débâtissage. La hauteur des ballons 760, 761, 762 déterminera physiquement la différence maximum autorisée entre la pression à l'intérieur des éléments filtrants 22 et la pression à l'extérieur des éléments filtrants 22. En tout point des éléments filtrants 22 du groupe de plateaux 2 indépendants en phase de débâtissage, la différence entre la pression à l'intérieur et la pression à l'extérieur desdits éléments filtrants 22 sera donc inférieure à la pression correspondant à la hauteur des ballons 760, 761, 762 remplis de fluide de soufflage.

Pendant la phase de filtration du groupe indépendant de plateaux 2 qui lui est connecté, chacun des trois collecteurs extérieurs 50, 51, 52 est en communication avec le conduit général 8 de filtrat au travers d'un ballon 760, 761, 762 qui lui est propre, du trop-plein 7600, 7610, 7620 dudit ballon 761, 762, 763 et de la vanne de sortie de filtrat 790, 791, 792 dudit ballon 761, 762, 763. Avant d'entamer la phase de débâtissage du groupe indépendant de plateaux 2 qui lui est connecté, celui des trois collecteurs extérieurs 50, 51, 52 concerné est en communication directe avec son ballon 760, 761, 762. La vanne automatique d'évent 780, 781, 782 et la vanne automatique de sortie de filtrat dudit ballon 760, 761, 762 se ferment et la vanne automatique d'équilibrage 770, 771, 772 dudit ballon 760, 761, 762 s'ouvre pour équilibrer la pression au sommet du filtre 1 et la pression au sommet dudit ballon 760, 761, 762, entamant ainsi la phase de débâtissage. Durant cette phase, le ballon 760, 761, 762 envoie le filtrat, sous le seul effet de la gravité, dans le collecteur extérieur 50, 51, 52 concerné. Le niveau de suspension dans le filtre 1, mesuré sur le transmetteur de niveau LT, augmente. Un niveau de suspension de consigne dans le filtre 1 est rétabli après chaque phase de débâtissage par ajout d'air comprimé au sommet du filtre 1 à travers la vanne automatique 9. La hauteur des ballons 760, 761, 762 est prévue pour que la différence maximum autorisée entre la pression à l'intérieur des éléments filtrants 22 et la pression à l'extérieur des éléments filtrants 22 ne soit jamais dépassée.

## Revendications

1. Filtre (1) à plateaux (2) verticaux comportant une cuve (3), dans lequel les plateaux (2) sont suspendus verticalement à l'intérieur de la cuve (3), chaque plateau (2) comprenant une tubulure (200) reliée à un collecteur extérieur (5, 50, 51, 52) à la cuve (3) pour l'évacuation du filtrat, ledit filtre est **caractérisé en ce qu'**il comprend N collecteurs extérieurs (5, 50, 51, 52), N étant supérieur ou égal à 2, que, pour tous les plateaux (2), deux plateaux (2) adjacents sont reliés à deux collecteurs extérieurs (5, 50, 51, 52) différents de manière que les plateaux (2) connectés à un même collecteur extérieur (5, 50, 51, 52) forment ainsi un groupe indépendant de plateaux (2) non adjacents dont les plateaux (2) pourront être débâtis simultanément, chaque gâteau (6) débâti faisant face à un gâteau (6) en cours de formation, le filtre (1) comportant N groupes indépendants de plateaux (2) qu'il est possible de débâtir en établissant un contre-courant de soufflage alternativement dans chacun des N collecteurs extérieurs (5, 50, 51, 52), et que chaque plateau (2) comprend au moins un élément filtrant (22), chaque élément filtrant (22) étant constitué d'au moins deux drains (220) et d'une toile (221), la toile (221) présentant des compartiments (222) dans chacun desquels est inséré un drain (220), chaque drain (220) étant disposé dans un compartiment (222) réalisé dans la toile (221), ces compartiments (222) pouvant être réalisés avec, par exemple, des coutures ou des soudures (223) sur ladite toile (221), de manière que, pendant la phase de filtration, la toile (221) soit plaquée sur les drains (220) et, pendant la phase de soufflage, la toile (221) se gonfle et s'écarte des drains (220), les compartiments (222) étant réalisés de manière que

leur étroitesse permet un faible gonflement de la toile (221) pour permettre un rapprochement des éléments filtrants (22) les uns par rapport aux autres.

2. Filtre (1) selon la revendication précédente **caractérisé en ce que** les plateaux (2) sont disposés en étoile.

3. Filtre (1) selon la revendication précédente **caractérisé en ce que** chaque collecteur extérieur (5) fait le tour du filtre (1).

4. Filtre (1) selon la revendication 2 ou 3 **caractérisé en ce qu'**il comprend une alternance de plateaux doubles (21) à deux éléments filtrants (22) comprenant une tubulure (200) longue et de plateaux simples (20) à un élément filtrant (22) comprenant une tubulure (200) courte, **en ce que** chaque plateau simple (20) est relié à un plateau double (21), formant ainsi des paires de plateaux (2), **en ce que** les plateaux simples (20) sont logés à la périphérie intérieure de la cuve (3), dans l'espace laissé libre par les plateaux doubles (21).

5. Filtre (1) selon la revendication précédente, **caractérisé en ce que** la tubulure (200) courte d'un plateau simple (20) est reliée à la tubulure (200) longue d'un plateau double (21) par un conduit (23) reliant les deux plateaux (2).

6. Filtre (1) selon une des revendications 4 ou 5, **caractérisé en ce que** chaque paire de plateaux (2) est reliée à un et un seul collecteur extérieur (5, 50, 51, 52) à travers la tubulure du plateau double (21).

7. Filtre (1) selon une des revendications 3 à 6, **caractérisé en ce que** N est supérieur ou égal à trois.

8. Filtre (1) selon la revendication précédente, **caractérisé en ce que** pour toutes les paires de plateaux (2), N paires consécutives de plateaux (2) sont connectées aux N collecteurs extérieurs (5, 50, 51, 52), et **en ce que** le plateau simple (20) et le plateau double (21) d'une même paire sont espacés d'un nombre pair de plateaux (2).

9. Procédé de débâtissage des gâteaux (6) d'un filtre (1) selon une des revendications précédentes, **caractérisé en ce que** chaque collecteur extérieur (5, 50, 51, 52) est parcouru par un courant de filtrat qui s'inverse selon un cycle prédéfini, et **en ce que** les cycles de tous les collecteurs extérieurs sont identiques et déphasés entre eux, **en ce que** à chaque phase de débâtissage, on ne débâtit que les plateaux (2) d'un groupe indépendant de plateaux (2) non adjacents reliés à un seul collecteur extérieur (5, 50, 51, 52) en provoquant un gonflement de la toile (221) de chaque compartiment (222) pour qu'elle s'écarte des drains (220), les autres plateaux (2) restant en phase de filtration au cours de laquelle la toile (221) de chaque compartiment (222) est plaquée sur les drains (220), assurant ainsi la continuité de l'extraction du filtrat, de manière à ne jamais débâtir deux plateaux (2) adjacents en même temps.

10. Procédé selon la revendication précédente, **caractérisé en ce que** les cycles d'inversions de courants de filtrat de tous les collecteurs extérieurs (5, 50, 51, 52) sont déphasés d'un même intervalle de temps.

11. Procédé selon une des revendications 9 ou 10, **caractérisé en ce que** l'inversion du courant de filtrat est effectuée au moyen d'une pompe (7), au travers d'un circuit de soufflage pouvant mettre le refoulement de ladite pompe (7) en communication avec chacun des collecteurs extérieurs (5, 50, 51, 52).

12. Procédé selon une des revendications 9 ou 10, **caractérisé en ce que** l'inversion du courant de filtrat est effectuée au moyen d'un ballon sur pressurisé (75) rempli dudit filtrat, au travers d'un circuit de soufflage pouvant mettre la sortie dudit ballon sur pressurisé (75) en communication avec chacun des collecteurs extérieurs (5, 50, 51, 52).

13. Procédé selon une des revendications 11 ou 12, **caractérisé en ce que** le circuit de soufflage est équipé en parallèle d'un déversoir de sécurité (70), de hauteur comprise entre 1 et 5 m au-dessus du filtre (1), raccordé à l'intérieur du filtre (1) en la partie haute de la cuve (3) dudit filtre (1).

14. Procédé selon une des revendications 9 ou 10, **caractérisé en ce que** l'inversion du courant de filtrat est effectuée au moyen d'un ballon (76) rempli dudit filtrat, en charge sur le filtre (1) et relié à la cuve (3) dudit filtre (1) en leur partie haute, ladite inversion étant effectuée au travers d'un circuit de soufflage pouvant mettre la sortie dudit ballon (76) en communication avec chacun des collecteurs extérieurs (5, 50, 51, 52).

15. Procédé selon une des revendications 9 ou 10, **caractérisé en ce que** l'inversion du courant de filtrat est effectuée au moyen de ballons (760, 761, 762) remplis dudit filtrat, en charge sur le filtre (1) et reliés à la cuve (3) dudit filtre (1) en leur partie haute, ladite inversion étant effectuée au travers de circuits de soufflage pouvant mettre chacun la sortie d'un et d'un seul desdits ballons (760, 761, 762) en communication avec un et un seul des collecteurs extérieurs (5, 50, 51, 52).

16. Procédé selon une des revendications 14 ou 15, **caractérisé en ce que** la partie haute des ballons (76, 760, 761, 762) est située entre 1 et 5 m au-dessus du filtre (1).

**Patentansprüche**

1. Filter (1) mit vertikalen Platten (2), umfassend einen Behälter (3), in dem die Platten (2) vertikal im Inneren des Behälters (3) aufgehängt sind, wobei jede Platte (2) einen Schlauch (200) umfasst, der mit einem bezüglich des Behälters (3) externen Sammelbehälter (5, 50, 51, 52) zur Evakuierung des Filtrats verbunden ist, wobei der Filter **dadurch gekennzeichnet ist, dass** er N externe Sammelbehälter (5, 50, 51, 52) umfasst, wobei N größer oder gleich 2 ist, dass bezüglich aller Platten (2) zwei angrenzende Platten (2) mit zwei unterschiedlichen externen Sammelbehältern (5, 50, 51, 52) verbunden sind, so dass die mit einem selben externen Sammelbehälter (5, 50, 51, 52) verbundenen Platten (2) auf diese Weise eine von den nicht angrenzenden Platten (2) unabhängige Gruppe bilden, deren Platten (2) gleichzeitig abgelöst werden können, wobei jeder abgelöste Kuchen (6) einem Kuchen (6) gegenübersteht, der gerade gebildet wird, wobei der Filter (1) N unabhängige Plattengruppen (2) umfasst, die durch Aufbau eines Gegenblasstroms abwechselnd in jedem der N externen Sammelbehälter (5, 50, 51, 52) ablösbar sind, und dass jede Platte (2) mindestens ein Filterelement (22) umfasst, wobei jedes Filterelement (22) aus mindestens zwei Abflüssen (220) und einem Netz (221) besteht, wobei das Netz (221) Kammern (222) aufweist, wobei in jede der Kammern ein Abfluss (220) eingeführt ist, wobei jeder Abfluss (220) in einer in dem Netz (221) ausgeführten Kammer (222) angeordnet ist, diese Kammern (222) beispielsweise mit Nähten oder Schweißnähten (223) auf dem Netz (221) ausgeführt werden können, so dass, während der Filterphase, das Netz (221) auf den Abflüssen (220) sitzt und, während der Blasphase, sich das Netz (221) aufbläht und von den Abflüssen (220) entfernt, wobei die Kammern (222) so ausgeführt sind, dass ihre Enge ein schwaches Aufblähen des Netzes (221) zulässt, um ein Annähern der Filterelemente (22) zueinander zu ermöglichen.

2. Filter (1) nach dem vorangehenden Anspruch, **dadurch gekennzeichnet, dass** die Platten (2) sternförmig angeordnet sind.

3. Filter (1) nach dem vorangehenden Anspruch, **dadurch gekennzeichnet, dass** jeder externe Sammelbehälter (5) den Filter (1) umkreist.

4. Filter (1) nach Anspruch 2 oder 3, **dadurch gekennzeichnet, dass** er eine Abfolge von doppelten Platten (21) auf zwei Filterelemente (22), die einen langen Schlauch (200) umfassen, und aus einfachen Platten (20) auf ein Filterelement (22), das einen kurzen Schlauch (200) umfasst, umfasst, und dass jede einfache Platte (20) mit einer doppelten Platte (21) verbunden ist, so dass sie so Plattenpaare (2) bilden, dass die einfachen Platten (20) am Innenumfang des Behälters (3), in dem Raum, der von den doppelten Platten (21) freigelassen wird, aufgenommen sind.

5. Filter (1) nach dem vorangehenden Anspruch, **dadurch gekennzeichnet, dass** der kurze Schlauch (200) einer einfachen Platte (20) mit dem langen Schlauch (200) einer doppelten Platte (21) durch eine Leitung (23) verbunden ist, die die beiden Platten (2) verbindet.

6. Filter nach einem der Ansprüche 4 oder 5, **dadurch gekennzeichnet, dass** jedes Plattenpaar (2) über den Schlauch der doppelten Platte (21) mit einem einzigen externen Sammelbehälter (5, 50, 51, 52) verbunden ist.

7. Filter (1) nach einem der Ansprüche 3 bis 6, **dadurch gekennzeichnet, dass** N größer oder gleich drei ist.

8. Filter (1) nach dem vorangehenden Anspruch, **dadurch gekennzeichnet, dass** bezüglich aller Plattenpaare (2) N aufeinanderfolgende Plattenpaare (2) mit N externen Sammelbehältern (5, 50, 51, 52) verbunden sind, und dass die einfache Platte (20) und die doppelte Platte (21) eines selben Paares durch eine gerade Anzahl an Platten (2) beabstandet sind.

9. Verfahren zum Ablösen von Kuchen (6) eines Filters (1) nach einem der vorangehenden Ansprüche, **dadurch gekennzeichnet, dass** jeder externe Sammelbehälter (5, 50, 51, 52) durch einen Filtratstrom durchlaufen wird, der sich gemäß einem vordefinierten Zyklus umkehrt, und dass die Zyklen aller externen Sammelbehälter untereinander identisch und phasenverschoben sind, dass in jeder Ablösephase nur die Platten (2) einer unabhängigen Plattengruppe (2) abgelöst werden, die nicht aneinander angrenzen und mit einem einzigen externen Sammelbehälter (5, 50, 51, 52) verbunden sind, indem ein Aufblähen des Netzes (221) jeder Kammer (222) hervorgerufen wird, damit es sich von den Abflüssen (220) entfernt, wobei die anderen Platten (2) phasengleich mit der Filtration bleiben, während der das Netz (221) jeder Kammer (222) auf den Abflüssen (220) sitzt, wodurch eine kontinuierliche Extraktion des Filtrats sichergestellt wird, so dass zwei angrenzende Platten (2) niemals zur selben Zeit abgelöst werden.

10. Verfahren nach dem vorangehenden Anspruch, **dadurch gekennzeichnet, dass** die Zyklen der Filtratstromumkehrungen aller externen Sammelbehälter (5, 50, 51, 52) um ein selbes Zeitintervall phasenverschoben sind.

**11.** Verfahren nach einem der Ansprüche 9 oder 10, **dadurch gekennzeichnet, dass** die Umkehrung des Filtratstroms mittels einer Pumpe (7) über einen Blaskreislauf erfolgt, der die Verdrängung der Pumpe (7) mit jedem der externen Sammelbehälter (5, 50, 51, 52) in Verbindung bringen kann.

**12.** Verfahren nach einem der Ansprüche 9 oder 10, **dadurch gekennzeichnet, dass** die Umkehrung des Filtratstroms mittels eines unter Überdruck stehenden Ballons (75), der mit dem Filtrat gefüllt ist, über einen Blaskreislauf erfolgt, der den Ausgang des unter Überdruck stehenden Ballons (75) in Verbindung mit jedem der externen Sammelbehälter (5, 50, 51, 52) bringen kann.

**13.** Verfahren nach einem der Ansprüche 11 oder 12, **dadurch gekennzeichnet, dass** der Blaskreislauf gleichzeitig mit einem Sicherheitsüberlauf (70) mit einer Höhe zwischen 1 m und 5 m über dem Filter (1) ausgestattet ist, der am oberen Teil des Behälters (3) des Filters (1) mit dem Inneren des Filters (1) verbunden ist.

**14.** Verfahren nach einem der Ansprüche 9 oder 10, **dadurch gekennzeichnet, dass** die Umkehrung des Filtratstroms mittels eines mit dem Filtrat gefüllten Ballons (76), der beladen auf dem Filter (1) und in ihrem oberen Teil mit dem Behälter (3) des Filters (1) verbunden ist, erfolgt, wobei die Umkehrung über einen Blaskreislauf erfolgt, der den Ausgang des Ballons (76) in Verbindung mit jedem der externen Sammelbehälter (5, 50, 51, 52) bringen kann.

**15.** Verfahren nach einem der Ansprüche 9 oder 10, **dadurch gekennzeichnet, dass** die Filtratstromumkehrung mittels von mit dem Filtrat gefüllten Ballons (760, 761, 762) erfolgt, die beladen auf dem Filter (1) und in ihrem oberen Teil mit dem Behälter (3) des Filters (1) verbunden sind, wobei die Umkehrung über Blaskreisläufe erfolgt, die jeweils den Ausgang eines einzigen der Ballons (760, 761, 762) in Verbindung mit einem einzigen der externen Sammelbehälter (5, 50, 51, 52) bringen können.

**16.** Verfahren nach einem der Ansprüche 14 oder 15, **dadurch gekennzeichnet, dass** sich der obere Teil der Ballons (76, 760, 761, 762) zwischen 1 m und 5 m über dem Filter (1) befindet.

**Claims**

**1.** Filter (1) with vertical plates (2) comprising a tank (3), in which the plates (2) are suspended vertically inside the tank (3), each plate (2) comprising a tube (200) connected to a collector (5, 50, 51, 52) outside the tank (3) for the discharge of the filtrate, said filter is **characterized in that** it comprises N external collectors (5, 50, 51, 52), N being greater than or equal to 2, that for all the plates (2), two adjacent plates (2) are connected to two different external collectors (5, 50, 51, 52) in such a way that the plates (2) connected to the same external collector (5, 50, 51, 52) thus form an independent group of non-adjacent plates (2) whose plates (2) can be discharged simultaneously, each discharged cake (6) facing a cake (6) being formed the filter (1) comprising N independent groups of plates (2) which can be discharged by establishing a counter-blowing current alternately in each of the N external collectors (5, 50, 51, 52), and that each plate (2) comprises at least one filtering element (22), each filtering element (22) being constituted by at least two drains (220) and a cloth (221), the cloth (221) having compartments (222) in each of which a drain (220) is inserted in a way that during the filtration phase, the cloth (221) is pressed against the drains (220) and, during the blowing phase, the cloth (221) swells and moves away from the drains (220), the compartments (222) being designed in such a way that their narrowness allows the cloth (221) to swell slightly in order to allow the filter elements (22) to be brought closer to one another

**2.** Filter (1) according to the preceding claim, **characterized in that** the plates (2) are arranged in a star shape.

**3.** Filter (1) according to the preceding claim **characterized in that** each external collector (5) goes around the filter (1).

**4.** Filter (1) according to claim 2 or 3, **characterized in that** it comprises an alternation of double plates (21) with two filtering elements (22) comprising a long tube (200) and single plates (20) with one filtering element (22) comprising a short tube (200), **in that** each single plate (20) is connected to a double plate (21), thus forming pairs of plates (2), **in that** the single plates (20) are accommodated on the inner periphery of the tank (3) in the space left free by the double plates (21).

**5.** Filter (1) according to the preceding claim, **characterized in that** the short tube (200) of a single plate (20) is connected to the long tube (200) of a double plate (21) by a conduit (23) connecting the two plates (2).

**6.** Filter (1) according to one of claims 4 or 5, **characterized in that** each pair of plates (2) is connected to one and only one external collector (5, 50, 51, 52) through the tubing of the double plate (21).

**7.** Filter (1) according to any of claims 3 to 6, **characterized in that** N is greater than or equal to three.

8. Filter (1) according to the preceding claim, **characterized in that** for all pairs of plates (2), N consecutive pairs of plates (2) are connected to the N outer collectors (5, 50, 51, 52), and **in that** the single plate (20) and the double plate (21) of the same pair are spaced by an even number of plates (2).

9. A method of discharging cakes (6) of a filter (1) according to any of the preceding claims, **characterized in that** each external collector (5, 50, 51, 52) is traversed by a filtrate flow which reverses according to a predefined cycle, and **in that** the cycles of all the external collectors are identical and out of phase with each other, **in that** in each discharging phase, only the plates (2) of an independent group of non-adjacent plates (2) connected to a single external collector (5, 50, 51, 52) by causing the cloth (221) of each compartment (222) to swell so that it moves away from the drains (220), the other plates (2) remaining in the filtration phase during which the cloth (221) of each compartment (222) is pressed against the drains (220), thus ensuring continuity of the extraction of the filtrate, so as never to discharge two adjacent plates (2) at the same time.

10. Method according to the preceding claim, **characterized in that** the cycles of reversing the filtrate flows of all the external collectors (5, 50, 51, 52) are out of phase by the same time interval.

11. Method according to one of claims 9 or 10, **characterized in that** the flow of filtrate is reversed by means of a pump (7), through a blowing circuit able to put the discharge of said pump (7) in communication with each of the external collectors (5, 50, 51, 52).

12. Method according to one of claims 9 or 10, **characterized in that** the flow of filtrate is reversed by means of an over pressurized balloon (75) filled with said filtrate, through a blowing circuit able to put the outlet of said over pressurized balloon (75) in communication with each of the external collectors (5, 50, 51, 52).

13. Method according to one of claims 11 or 12, **characterized in that** the blower circuit is equipped in parallel with a safety overflow (70) between 1 and 5 m inclusive high above the filter (1) and connected to the interior of the filter (1) in the upper part of the tank (3) of said filter (1).

14. Method according to one of claims 9 or 10, **characterized in that** the inversion of the filtrate flow is carried out by means of a balloon (76) filled with said filtrate, loaded on the filter (1) and connected to the tank (3) of said filter (1) in their upper part, said inversion being carried out through a blowing circuit able to put the outlet of said balloon (76) in communication with each of the external collectors (5, 50, 51, 52).

15. Method according to one of claims 9 or 10, **characterized in that** the inversion of the filtrate flow is carried out by means of balloons (760, 761, 762) filled with the said filtrate, loaded on the filter (1) and connected to the tank (3) of the said filter (1) at their upper part, said inversion being effected through blowing circuits each of which can put the outlet of one and only one of said tanks (760, 761, 762) in communication with one and only one of the external collectors (5, 50, 51, 52).

16. A method according to one of claims 14 or 15, **characterized in that** the upper part of the balloons (76, 760, 761, 762) is located between 1 and 5 m above the filter (1).

Fig. 1

Fig. 2

Fig. 3

Fig. 4

Fig. 5a

Fig. 5b

Fig. 6a

Fig. 6b

Fig. 7

Fig. 8a

Fig. 8b

EP 3 532 184 B1

Fig. 9

Fig. 10

Fig. 11

Fig. 12

**EP 3 532 184 B1**

## RÉFÉRENCES CITÉES DANS LA DESCRIPTION

**Documents brevets cités dans la description**

- FR 1425376 A
- GB 2094653 A
- US 4790935 A
- EP 226478 A